# EUROPEAN PATENT SPECIFICATION

(11) **EP 4 073 538 B1**
(45) Date of publication and mention of the grant of the patent: **06.11.2024**
(21) Application number: 20829543.6
(22) Date of filing: 10.12.2020
(51) Int. Cl.: G01S 5/22, G01S 11/14

(54) **METHOD, DEVICE, SYSTEM FOR POSITIONING ACOUSTIC WAVE SIGNAL SOURCE AND VEHICLE**
VERFAHREN, VORRICHTUNG, SYSTEM ZUR POSITIONIERUNG EINER AKUSTISCHEN SCHALLWELLENSIGNALQUELLE UND FAHRZEUG
PROCÉDÉ, DISPOSITIF, SYSTÈME DE POSITIONNEMENT D'UNE SOURCE DE SIGNAL D'ONDE ACOUSTIQUE ET VÉHICULE

(30) Priority: 12.12.2019 CN 201911288958
(43) Date of publication of application: 19.10.2022
(73) Proprietor: Bayerische Motoren Werke Aktiengesellschaft, 80809 München (DE)
(72) Inventor: BOHNENKAEMPER, Timo, Beijing 100027 (CN)
(86) International application number: PCT/EP2020/085640
(87) International publication number: WO 2021/116351

(56) References cited:
- CN-A- 108 919 243
- DE-A1- 102004 045 690
- DE-A1- 102015 011 246
- US-A1- 2004 044 477
- US-B1- 9 278 689

## Description

### TECHNICAL FIELD

The embodiments of the present disclosure relate to the field of automotive electronics technology, and more specifically, to a method, device, and system for positioning an acoustic wave signal source in a vehicle, and a vehicle comprising the system.

### BACKGROUND ART

Special vehicles such as ambulances, police vehicles, and fire trucks when performing missions often need to race against time and need to avoid other vehicles traveling on the road. Therefore, in most areas of the world, it is a legal obligation to make way for special vehicles such as ambulances, police vehicles and fire trucks when traveling on the road. When a motor vehicle driver comes across an ambulance, police vehicle or fire truck performing emergency missions during traveling, he or she shall take the initiative to make way by pulling over, slowing down and the like.

This also raises requirements for popular drivers: when traveling on the road, it is imperative to readily perceive the traffic demand of a special vehicle such as an ambulance and judge its location by a direction from which a siren sound comes, and immediately make the traffic passage for the special vehicle and yield to the special vehicle. As limited by the in-vehicle conditions, an occupant in the vehicle can often only perceive the siren sound, but it is very difficult to accurately identify a direction from which the sound comes. At times, even if a general direction of the siren can be estimated, since the special vehicle cannot be observed, its location cannot be accurately determined, let alone to judge a location of the special vehicle.

DE102004045690A1 discloses a device for detecting external sound sources in the surroundings of a motor vehicle comprises a non-linear microphone array and an evaluation unit that can determine the position of sound sources from the relative phase displacements of the sound sources to each of the microphones and or sound signal time of flight differences. This document is based on the idea of using acoustic information from the environment to determine sources of danger. The acoustic information is used to detect vehicles driving ahead. Alternatively, the acoustic information about the area surrounding the motor vehicle is linked to the optical information from at least one digital camera.

US9278689B1 discloses an automated driving system including a perception system disposed on an autonomous vehicle. Said automated driving system can detect, based on an audio recording captured by the perception system, an emergency vehicle operating in an emergency mode. After detection, an image of the environment surrounding the autonomous vehicle can be captured by the perception system. Based on at least one of the audio recording and the image of the environment surrounding the autonomous vehicle, a location of the emergency vehicle in respect to the autonomous vehicle can be determined, such that the automated driving system can send a command to one or more vehicle systems of the autonomous vehicle to implement one or more maneuvers to comply with the traffic regulation.

Therefore, how to solve the above-described problems has become an urgent problem to be solved.

### SUMMARY OF THE INVENTION

The invention is defined by the content of the independent claims, with embodiments of the invention given by the dependent claims.

### CONTENT OF THE DISCLOSURE

In order to solve the problems in the prior art, in one embodiment of the present disclosure, a method for positioning an acoustic wave signal source in a vehicle is provided. The method comprises:
- collecting at least two acoustic wave signals;
- calculating a relative position of the acoustic wave signal source relative to the vehicle based on the at least two acoustic wave signals;
- obtaining a position of the vehicle; and
- determining positioning information of the acoustic wave signal source based on the position of the vehicle and the calculated relative position of the acoustic wave signal source relative to the vehicle.

Here, a vehicle may be understood in the sense of the present disclosure as any type of vehicle, by means of which one or more persons and/or goods may be transported. The vehicle particularly consists in cars, trucks, motorcycles, buses and the like. The vehicle may involve internal combustion engine vehicles (ICE), electric vehicles (EV), such as fuel cell vehicles (FCV) and battery electric vehicles (BEV) as well as hybrid electric vehicles (HEV), such as plug-in hybrid electric vehicles (PHEV), and the like.

According to the present disclosure, the acoustic wave signal may refer to any sound emitted by an acoustic wave signal source outside the vehicle, such as an alarm sound, a siren sound, an alarm bell, a horn sound, a broadcast sound, vocal sound, noise and the like. The sound may be emitted by a fixed object or a moving object, and in particular, may also include a vocal sound that is preferably amplified by means of a loudspeaker. The collected acoustic wave signal may involve a digital signal or an analog signal. In the present disclosure, the at least two acoustic wave signals are collected by at least two acoustic wave collecting devices arranged at different positions of the vehicle, and thus the at least two acoustic wave signals may be understood as at least two routes of acoustic signals respectively collected at different positions. Here, the number of the acoustic wave collecting devices may be two or more. Preferably a microphone array may be used. In addition, it may be, for example, arranged in two or more places inside and/or outside the vehicle, such as on the steering wheel, in the passenger seat, in the A, B, and C pillars of the vehicle, in the rearview mirror, inside and/or outside the door, in the roof, in the engine bonnet, in the trunk, in the fender and the like. In order to improve the positioning accuracy, it is preferable to space apart the acoustic wave collecting devices by a long distance. Preferably, the acoustic wave collecting devices may be a microphone or a MIC. In the present disclosure, the collection of the acoustic wave signals may be continuous, intermittent, or triggered by preset conditions, for example, collected every 5 or 10 seconds, when the sound intensity level is higher than, for example, 75 decibels, or triggered when preset acoustic wave data is recognized.

According to the present disclosure, first of all, the at least two acoustic wave collecting devices (microphones) installed on the vehicle may be used to collect acoustic wave signals. Then, based on the at least two acoustic wave signals, the relative position of the acoustic wave signal source relative to the vehicle is calculated. Here, the time difference, intensity difference, timbre difference, and/or phase difference between the at least two acoustic wave signals may be used to calculate the relative position. Next, the position of the vehicle, and in particular the real-time position provided by the navigation device are obtained. Thus, based on the position of the vehicle and the calculated relative position of the acoustic wave signal source relative to the vehicle, the positioning information of the acoustic wave signal source is determined. The method according to the present disclosure can more accurately and concretely determine a specific location of the acoustic wave signal source outside the vehicle as compared to human ear, thereby facilitating subsequent driving operations of the driver or the vehicle, such as ready avoidance.

Preferably, the received acoustic wave signal is compared with the preset acoustic wave data, for example, in terms of frequency change, acoustic characteristics or voiceprint, to judge whether the received acoustic signal is a specific sound, such as an alarm sound of a special vehicle. It may be contemplated to implement the method according to the present disclosure only when an alarm sound of a special vehicle is recognized. It may also be contemplated that the type of a special vehicle is identified by said comparison: whether it is a police vehicle, a fire truck, an ambulance or an engineering vehicle. In addition, the method according to the present disclosure may be implemented continuously. That is, the acoustic wave signal source is continuously positioned temporally to acquire its motion state and the like.

By way of the method according to the present disclosure, the determined positioning information of the acoustic wave signal source may be provided to the driver in a visual or auditory means and the like, or provided to other devices or systems of the vehicle in the form of data, such as a driver assistance system, an automatic longitudinal guidance system, an automatic transversal guidance system or an automatic driving system and the like, to perform an avoidance driving.

According to one embodiment of the present disclosure, the method further includes marking the acoustic wave signal source in a digital map according to the positioning information of the acoustic wave signal source.

In this way, the vehicle may display, for example, a location of a special vehicle that is emitting an alarm sound on a digital map, especially a map of a navigation device, based on the determined location of the acoustic wave signal source. Accordingly, the driver may visually observe a specific location of the special vehicle that emits the alarm sound on the in-vehicle navigation display. Therefore, on the one hand, the errors by artificial judgment may be reduced, so that the driver may know a location of the special vehicle readily and accurately, and quickly take effective avoidance operations. On the other hand, the present disclosure improves the functionality of automated driving at any degree of automation. For example, based on the determined positioning information of the acoustic wave signal source, the driver is prompted to take over the vehicle, or an avoidance route is automatically designed to complete avoidance driving operations. Here, the exemplary degree of automation consists in auxiliary, partially automated, highly automated or fully automated driving, especially highly automated and fully automated driving. In the present disclosure, it is possible to improve the traffic efficiency, which also makes a smoother traffic of special vehicles.

According to one embodiment of the present disclosure, the method further includes correcting an actual position of the acoustic wave signal source by means of road information in the digital map.

The propagation of acoustic wave in the air is affected by various factors: for example, reflection by an object (such as a building and an object), interference, diffraction, air disturbance and the like. The accuracy in measuring acoustic waves is far inferior to optical and electromagnetic wave measurement methods and the like. In the present disclosure, it is set forth to correct an actual position of the acoustic wave signal source by means of road information in the digital map, so as to compensate the errors caused by the acoustic waves based on the above-described factors. Here, it is generally assumed that special vehicles are travelled or parked on the road, and in general areas, the coverage area of the road also usually only occupies a part of the surface area. Thus, the road may be set as a boundary condition of an actual position of the acoustic signal source, e.g., when the determined position is a non-road area on the map, it is automatically corrected to a position on the road, especially the carriageway. For example, in the simplest way, it may be corrected to a position on the nearest road. Additionally, it is also possible to consider other aspects of the acoustic wave signal, such as the attenuation of the sound intensity level during propagation, or make reference to the acoustic wave signals collected at other positions of the vehicle during the correction.

According to one embodiment of the present disclosure, the step of "calculating a relative position of the acoustic wave signal source relative to the vehicle based on the at least two acoustic wave signals" includes:
- calculating a time difference between the at least two acoustic wave signals; and
- calculating a relative position of the acoustic wave signal source relative to the vehicle based on collection positions of the at least two acoustic wave signals as well as the time difference.

In the embodiments of the present disclosure, it is preferable to use a positioning method which is only based on the time difference, that is, the TDOA (time difference of arrival) method, also the time delay estimation method to calculate the relative position of the acoustic signal source relative to the vehicle, since the measurement of the time difference is not affected by whether the at least two acoustic wave collecting devices are both arranged inside or outside the vehicle at the same time, the acoustic waves are also processed in a very simple manner, with relatively low requirements for the calculation performance.

Preferably, the step of "calculating a time difference between the at least two acoustic wave signals" includes: comparing receiving times for the same sound in the at least two acoustic wave signals. For example, the time when the rising edge, the falling edge, or the peak value of the same acoustic waveform in the at least two acoustic wave signals appear can be compared to determine the time difference between these acoustic wave signals. In order to improve the accuracy of the results, it is preferable to consider: using the acoustic wave collecting devices that are spaced apart by a long distance to collect the acoustic wave signals. In addition, in the case of collecting three or more acoustic signals, it is possible to calculate a time difference of the time for receiving the same sound between any two of them, and average the calculated relative positions, so as to improve the positioning accuracy.

According to one embodiment of the present disclosure, the method includes judging a movement direction and speed of the acoustic wave signal source by a frequency shift of the collected acoustic wave signal. Since this vehicle and/or the acoustic wave signal source may be both in a motion state, the Doppler effect might occur in the acoustic collection or emission. The frequency shift value may be calculated by referring to the preset sound data in the vehicle, thereby obtaining the relative speeds and relative movement directions between this vehicle and the acoustic wave signal source, that is, whether moving away from each other or close to each other. In this embodiment, the information of relative movement may be obtained immediately, which facilitates subsequent operations. For example, when it is found that an acoustic wave signal source such as a special vehicle appears in front of this vehicle and moves away from the vehicle, it may not be necessary to provide it to the driver or the automatic driving system, since there is a very low probability of such special vehicle affecting the travel of this vehicle. In addition, this embodiment may be particularly implemented in conjunction with the above-mentioned embodiments of the present disclosure, that is, correcting an actual position of the acoustic wave signal source by means of road information in the digital map. In this way, when an actual position of the acoustic wave signal source is determined, the position of the acoustic wave signal source with both the road area and the road traffic direction as boundary conditions. This makes an actual position of the determined acoustic wave signal more credible, and such result is of more significant for the travel of the vehicle: the person or system driving the vehicle can quickly and accurately know whether the acoustic wave signal source may interfere with the travel of this vehicle, thereby avoiding unnecessary avoidance measures.

According to one embodiment of the present disclosure, the method includes considering an amplitude of the acoustic wave signal when calculating the relative position of the acoustic wave signal source relative to the vehicle. Here, the relative position of the acoustic wave signal source may be calculated independently based on an amplitude difference representing the loudness difference. In addition, it is also possible to estimate the sound intensity level or loudness of the acoustic wave in the vehicle based on the amplitude of the acoustic wave signal, and compare it with the original sound intensity level or loudness in the pre-stored sound data so as to estimate a distance between the acoustic wave signal source and the vehicle. Here, it is preferable to analyze the collected at least two acoustic wave signals from multiple aspects, so as to more accurately and comprehensively position the acoustic wave signal source.

In a second aspect of the present disclosure, there is provided a device for positioning an acoustic wave signal source in a vehicle, characterized in that the device comprises:
- an acoustic wave collecting module configured to collect at least two acoustic wave signals;
- a relative position calculating module configured to calculate a relative position of the acoustic wave signal source relative to the vehicle based on the at least two acoustic wave signals;
- a position obtaining module configured to obtain a position of the vehicle; and
- a positioning information calculating module configured to determine positioning information of the acoustic wave signal source based on the position of the vehicle and the calculated relative position of the acoustic wave signal source relative to the vehicle.

The device for positioning an acoustic wave signal source in a vehicle according to the present disclosure may include: an acoustic wave collecting module, a relative position calculating module, a position obtaining module, and a positioning information calculating module. The device according to the present disclosure can more accurately and concretely determine a specific location of the acoustic wave signal source outside the vehicle as compared to human ear, thereby facilitating subsequent driving operations of the driver or the vehicle, such as ready avoidance.

The device for positioning an acoustic signal source in a vehicle may be implemented as hardware or software. The device may be constructed as a part of an in-vehicle electrical system of the vehicle as hardware and may include one or more hardware modules consisting of traditional data processing units, such as logic circuits, microcomputers, or field programmable gate arrays (FPGA). When implemented in software, each unit of the device in the present disclosure is essentially a code segment that performs a required task. The code segments may be stored in a processor-readable medium or transmitted by a computer data signal. The "processor readable medium" may include any medium that can store information. Examples of the processor-readable medium include an electronic circuit, a semiconductor memory device, ROM, flash memory or other non-volatile memories, floppy disk, CD-ROM, optical disk, hard disk, and the like.

According to one embodiment of the present disclosure, the device further includes a map marking module configured to mark the acoustic wave signal source in a digital map.

According to one embodiment of the present disclosure, the device further includes a correcting module configured to correct an actual position of the acoustic wave signal source by means of road information in the digital map.

According to one embodiment of the present disclosure, the relative position calculating module is further configured to:
- calculate a time difference between the at least two acoustic wave signals; and
- calculate a relative position of the acoustic wave signal source relative to the vehicle based on collection positions of the at least two acoustic wave signals as well as the time difference.

According to one embodiment of the present disclosure, the relative position calculating module is further configured to: compare receiving times for the same sound in the at least two acoustic wave signals.

According to one embodiment of the present disclosure, the relative position calculating module is further configured to:
- judge a movement direction and speed of the acoustic wave signal source by a frequency shift of the collected acoustic wave signal; and/or
- consider an amplitude of the acoustic wave signal when calculating the relative position of the acoustic wave signal source relative to the vehicle.

In a third aspect of the present disclosure, there is provided a system for positioning an acoustic wave signal source in a vehicle, characterized in that the system comprises:
- a device for positioning an acoustic wave signal source in a vehicle according to the present disclosure;
- at least two acoustic wave collecting devices mounted at different positions of the vehicle;
- at least one navigation device for providing a position of the vehicle.

In particular, the system according to the present disclosure may be retrofitted to an existing vehicle, for example, a device constructed in the form of hardware or software is installed on an existing vehicle and the device is connected with the at least two acoustic wave collecting devices and the at least one navigation device.

In a fourth aspect of the present disclosure, there is provided a vehicle, characterized in that the vehicle comprises the system for positioning an acoustic wave signal source in a vehicle according to the present disclosure. The vehicle according to the present disclosure can more accurately and concretely determine a specific location of the acoustic wave signal source outside the vehicle as compared to human ear, thereby facilitating subsequent driving operations of the driver of the vehicle or the vehicle itself, such as ready avoidance.

In the present disclosure, the acoustic wave signal source is positioned such that it is possible to identify a real-time location of a special vehicle such as an ambulance based on a direction from which the alarm sound comes, and inform the driver or vehicle of the location of the special vehicle. Accordingly, it is possible to help the driver and the vehicle to perceive a special vehicle such as an ambulance readily, and immediately avoid the traffic passage of the special vehicle and give way to the special vehicle. Even if an occupant within the vehicle as limited by the in-vehicle conditions does not perceive a siren sound or cannot recognize a direction from which the sound comes, the driver or the vehicle may still avoid readily and appropriately.

### BRIEF DESCRIPTION OF THE DRAWINGS

FIG. 1 is a flowchart of one embodiment of the method for positioning an acoustic wave signal source in a vehicle according to the present disclosure,
FIG. 2 is a flowchart of another embodiment of the method for positioning an acoustic wave signal source in a vehicle according to the present disclosure,
FIG. 3 is a block view of one embodiment of the device for positioning an acoustic wave signal source in a vehicle according to the present disclosure,
FIG. 4 is a block view of another embodiment of the device for positioning an acoustic wave signal source in a vehicle according to the present disclosure,
FIG. 5 is a schematic view of one application scenario of an embodiment of the present disclosure, and
FIG. 6 is a schematic view of marking an acoustic wave signal source on a digital map.

### DETAILED DESCRIPTION OF PREFERRED EMBODIMENTS

In order to make the aforementioned object, features and advantages of the present disclosure more apparent and understandable, detailed explanations are made to the specific embodiments of the present disclosure in combination with the drawings as follows.

In the following description, specific details are set forth in order to facilitate an adequate understanding of the present disclosure. However, the present disclosure can be implemented in multiple manners other than those described herein. Therefore, the present disclosure is not limited by the specific embodiments disclosed below. The reader, however, is reminded that the scope of protection, and the scope of the invention, is defined by the appended claims.

The meaning of the expression "and/or" used herein is to include at least one of the assemblies listed before and after the expression. Moreover, the meaning of the expression "connection/coupling" used is to include direct connection with another assembly or indirect connection through another assembly. The singular forms herein also include the plural forms, unless particularly mentioned in the wording. Also, the meaning of the assemblies, steps, operations, and elements used herein which involve "comprising" or "containing", is to be present with or add at least one other assembly, step, operation, and element.

It should be understood that the terms "vehicle" or "of vehicle" or other similar terms as used herein generally comprise motor vehicles, for example including sport utility vehicles (SUVs), large buses, large trucks, and passenger vehicles of various commercial vehicles, comprises various boats, ship vessels, aircrafts and the like, and comprises hybrid vehicles, electric vehicles, plug-in hybrid electric vehicles, hydrogen powered vehicles and other alternative fuel vehicles (for example, fuels from sources other than petroleum). As mentioned herein, a hybrid vehicle is a vehicle having two or more sources of power, such as a vehicle incorporating both gasoline power and electric power.

As used herein, the phrase "vehicle (in-vehicle) system" means an integrated information system with wireless communication capabilities. These systems are sometimes referred to as in-vehicle information systems and are typically integrated with telematics services, entertainment systems, and/or navigation devices. The driver assistance system ((Advanced) Driver Assistance System, ADAS) is an active safety technology, which collects real-time (road condition) environmental data for identification, detection and analysis of static and dynamic objects using a variety of sensors installed on the vehicle, such as cameras, radars, lasers, and ultrasonics, thereby allowing the driver to perceive potential dangers in the fastest time so as to attract attention and improve safety.

In addition, it should be appreciated that, the term "controller" refers to a hardware device that includes a memory and a processor. The memory is configured to store program instructions, and the processor is configured to execute the program instructions to perform one or more of the processes described further below.

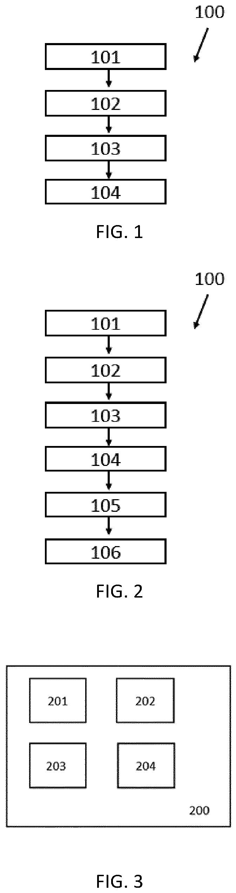

FIG. 1 is a flowchart of one embodiment of the method 100 for positioning an acoustic wave signal source in a vehicle according to the present disclosure. First, according to step 101, at least two acoustic wave signals are collected. In the present disclosure, the at least two acoustic wave signals are collected by at least two acoustic wave collecting devices arranged at different positions of the vehicle, and thus the at least two acoustic wave signals may be understood as at least two routes of acoustic signals respectively collected at different positions at the same time.

Then, in step 102, a relative position of the acoustic wave signal source 20 relative to the vehicle 10 is calculated based on the at least two acoustic wave signals. Here, the time difference, intensity difference, timbre difference, and/or phase difference between the at least two acoustic wave signals may be used to calculate the relative position.

For example, an acoustic wave is generated at the acoustic wave signal source. The acoustic wave will reach the left and right ears of a person successively, thereby generating a time difference. The brain recognizes a source direction of the sound based on the time difference. In the real world, a sound is received mainly by a microphone or mike. Bionically, it is also possible to receive a sound and identify a location of the acoustic wave signal source by two microphones.

Next, in step 103, a position of the vehicle 10 is obtained. In step 104, positioning information of the acoustic wave signal source 20 is determined based on the position of the vehicle 10 and the calculated relative position of the acoustic wave signal source 20 relative to the vehicle 10.

The method 100 according to the present disclosure can more accurately and concretely determine a specific location of the acoustic wave signal source 20 outside the vehicle as compared to human ear, thereby facilitating subsequent driving operations of the driver or the vehicle, such as ready avoidance.

Currently, the sound direction recognition technology may mainly be implemented in the following means. The first is the Peak Detection Method, which mainly amplifies, filters, and integrates the acoustic waves received by the microphones so that the acoustic waves become similar triangular waves; then finds a triangular wave peak corresponding to each microphone, and compares these peaks to calculate a time difference; and finally calculate an acoustic incidence angle by using a mathematical formula (where c is an acoustic velocity, and ΔT is a time difference), and a schematic view of conversion between the time difference and the incidence angle, so as to obtain a sound source position of the acoustic waves. The second is the Cross-correlation Method, which mainly amplifies and filters the acoustic waves received by each microphone, and then converts them into digital data through an analog-to-digital converter (ADC) for cross-correlation calculation of the digital data corresponding to the different microphones, so as to obtain a maximum cross-correlation value (i.e., a time difference), and find the sound incident angle based on the maximum cross-correlation value.

FIG. 2 is a flowchart of another embodiment of the method 100 for positioning an acoustic wave signal source in a vehicle according to the present disclosure. The steps 101 to 104 shown in FIG. 2 in addition to FIG. 1 further include: step 105, marking the acoustic wave signal source 20 in a digital map 30 according to the positioning information of the acoustic wave signal source 20; and step 106, correcting an actual position of the acoustic wave signal source 20 by means of road information in the digital map 30. In such preferred embodiment, the vehicle 10 may display a location of a special vehicle that is emitting an alarm sound on a digital map 30, and particularly frame it on a road area in the digital map, based on the determined location of the acoustic wave signal source 20. Accordingly, the driver may visually observe a specific location of the special vehicle that emits the alarm sound. Therefore, on the one hand, the errors by artificial judgment may be further reduced, so that the driver may know a location of the special vehicle readily and accurately, and quickly take effective avoidance operations. On the other hand, the present disclosure improves the functionality of automated driving at any degree of automation. For example, based on the determined positioning information of the acoustic wave signal source, the driver is prompted to take over the vehicle, or an avoidance route is automatically designed to complete avoidance driving operations. In the embodiments of the present disclosure, it is possible to improve the traffic efficiency, which also makes a smoother traffic of special vehicles.

Preferably, the step 102 of "calculating a relative position of the acoustic wave signal source 20 relative to the vehicle 10 based on the at least two acoustic wave signals" may include:
- calculating a time difference between the at least two acoustic wave signals; and
- calculating a relative position of the acoustic wave signal source 20 relative to the vehicle 10 based on collection positions of the at least two acoustic wave signals as well as the time difference.

For example, it is supposed that two acoustic wave collecting devices are used to collect two routes of acoustic wave signals. In the case where it is measured that the time difference for the same sound reaching the two acoustic wave collecting devices is Δt, the position of the acoustic wave signal source should be in a hyperbola with a distance difference of cΔt from the collection positions of the two acoustic wave signals. Here, preferably, an amplitude of the acoustic wave signal is considered in the step 102 of "calculating a relative position of the acoustic wave signal source 20 relative to the vehicle". In the case of considering an amplitude difference or ratio of the received acoustic wave signals, the side of the hyperbola on which the acoustic wave signal source is located and the distance from the two acoustic wave collecting devices are determined.

In the present disclosure, it is preferable to use three acoustic wave collecting devices, so that the position of the acoustic wave signal source may be determined only based on the time difference or time delay. Here, at least two pairs of hyperbolas may be obtained by the time differences between any two of the three acoustic wave collecting devices, and the intersection of these hyperbolas is the position of the acoustic wave signal source relative to the vehicle.

Here, the above-described step of "calculating a time difference between the at least two acoustic wave signals" specifically includes comparing receiving times for the same sound in the at least two acoustic wave signals. The time when the rising edge, the falling edge, or the peak value of the same acoustic waveform in the at least two acoustic wave signals appear may be compared to determine the time difference between these acoustic wave signals.

Particularly preferably, the method includes: judging a movement direction and speed of the acoustic wave signal source 20 by a frequency shift of the collected acoustic wave signal. The frequency shift value may be calculated by referring to the preset sound in the vehicle, thereby obtaining the relative speeds and relative movement directions between this vehicle 10 and the acoustic wave signal source 21, that is, whether moving away from each other or close to each other. This embodiment may be particularly implemented in conjunction with the above-mentioned step 106 of the present disclosure, that is, correcting an actual position of the acoustic wave signal source 20 by means of road information in the digital map 30. In this way, when an actual position of the acoustic wave signal source 20 is determined, it is possible to define a potential position of the acoustic wave signal source with both the road area and the road traffic direction as boundary conditions. This makes an actual position of the determined acoustic wave signal more credible, and such result is of more significant for the travel of the vehicle: the person or system driving the vehicle can quickly and accurately know whether the acoustic wave signal source may interfere with the travel of this vehicle, thereby avoiding unnecessary avoidance measures.

FIG. 3 is a block view of one embodiment of the device for positioning an acoustic wave signal source in a vehicle according to the present disclosure. The device 200 for positioning an acoustic wave signal source in a vehicle according to the present disclosure comprises:
- an acoustic wave collecting module 201 configured to collect at least two acoustic wave signals;
- a relative position calculating module 202 configured to calculate a relative position of the acoustic wave signal source 20 relative to the vehicle 10 based on the at least two acoustic wave signals;
- a position obtaining module 203 configured to obtain a position of the vehicle 10; and
- a positioning information calculating module 204 configured to determine positioning information of the acoustic wave signal source 20 based on the position of the vehicle 10 and the calculated relative position of the acoustic wave signal source 20 relative to the vehicle 10.

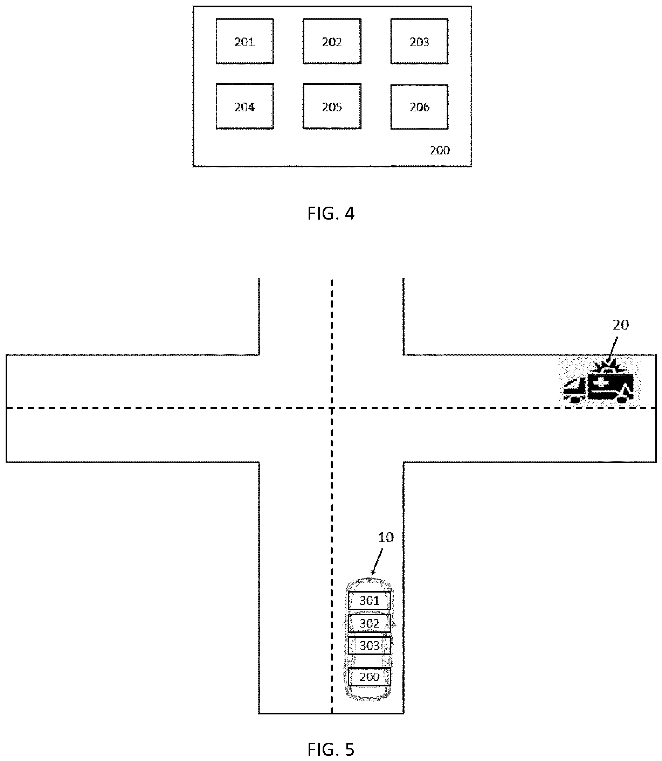

FIG. 4 is a block view of another embodiment of the device for positioning an acoustic wave signal source in a vehicle according to the present disclosure. Compared with the device shown in FIG. 3, the device 200 for positioning an acoustic wave signal source in a vehicle involved in FIG. 4 additionally further includes: a map marking module 205 configured to mark the acoustic wave signal source in a digital map 30; and a correcting module 206 configured to correct 106 an actual position of the acoustic wave signal source 20 by means of road information in the digital map 30.

Preferably, the relative position calculating module 202 is further configured to:
- calculate a time difference between the at least two acoustic wave signals; and
- calculate a relative position of the acoustic wave signal source 20 relative to the vehicle 10 based on collection positions of the at least two acoustic wave signals as well as the time difference.

Preferably, the relative position calculating module 202 is further configured to:
- compare receiving times for the same sound in the at least two acoustic wave signals.

Preferably, the relative position calculating module 202 is further configured to:
- judge a movement direction and speed of the acoustic wave signal source by a frequency shift of the collected acoustic wave signal; and/or
- consider an amplitude of the acoustic wave signal when calculating 102 the relative position of the acoustic wave signal source 20 relative to the vehicle 10.

In addition, the present disclosure also relates to a system for positioning an acoustic wave signal source in a vehicle, characterized in that the system comprises:
- a device 200 for positioning an acoustic wave signal source in a vehicle according to the present disclosure;
- at least two acoustic wave collecting devices mounted at different positions of the vehicle 10;
- at least one navigation device for providing a position of the vehicle 10.

In addition, the present disclosure also relates to a vehicle comprising the above-described system for positioning a source of acoustic signals in a vehicle.

FIG. 5 is a schematic view of one application scenario of an embodiment of the present disclosure. A device 200 for positioning an acoustic wave signal source in a vehicle according to the present disclosure, a first acoustic wave collecting device 301, a second acoustic wave collecting device 302, and a third acoustic wave collecting device 303 are schematically shown on the vehicle 10. Here, three acoustic wave collecting devices are exemplarily shown, and the number of the acoustic wave collecting devices may be two, four, five or the like according to the present disclosure. Preferably, a microphone array or the like may also be used. These acoustic wave collecting devices 301, 302 and 303 are respectively configured to obtain a first acoustic wave signal, a second acoustic wave signal, and a third acoustic wave signal. It should be noted that the blocks 301 to 303 in FIG. 5 only show inclusion relationships between these acoustic wave collecting devices and the vehicle, but do not represent their installation positions. These acoustic wave collecting devices may be mounted at any position inside and/or outside the vehicle such as to be spaced apart by a distance. Then, the time differences among the first acoustic wave signal, the second acoustic wave signal and the third acoustic wave signal are calculated. Therefore, the relative position of the acoustic wave signal source 20 relative to the vehicle 10 may be calculated based on the collection positions of the first acoustic wave collecting device 301, the second acoustic wave collecting device 302, and the third acoustic wave collecting device 303 as well as the measured time differences. Since three acoustic wave collecting devices are used here, the position of the acoustic wave signal source 20 may be determined only based on the time difference or time delay. Here, at least two pairs of hyperbolas may be obtained by the time differences between any two of the three acoustic wave collecting devices, and the intersection of these hyperbolas is the relative position of the acoustic wave signal source 20 relative to the vehicle 10.

Exemplarily, the step of calculating a time difference may be divided into the following three steps. First, the first acoustic wave signal, the second acoustic wave signal, and the third acoustic wave signal are processed by signal conversion, so as to obtain a first conversion pulse signal, a second conversion pulse signal and a third conversion pulse signal, respectively. Then, the first conversion pulse signal, the second conversion pulse signal and the third conversion pulse signal are processed by sampling, so as to obtain a first sampling signal, a second sampling signal and a third sampling signal. Finally, based on the first sampling signal, the second sampling signal, and the third sampling signal, the time differences among the first sampling signal, the second sampling signal and the third sampling signal are calculated.

In addition, the system according to the present disclosure may also use plural acoustic wave collecting devices, each of which receives an acoustic wave signal, and amplifies and filters the acoustic wave signal, so as to obtain an amplified acoustic wave signal, and then processes the amplified acoustic wave signal by signal conversion, so as to obtain a conversion pulse signal; and a processing unit connected to the acoustic wave collecting device for sampling the conversion pulse signal output by the acoustic wave collecting device, so as to obtain plural sampling signal sequences, and then calculate plural time differences by the sampling signals in a maximum similarity method, so as to look up a table with the time differences so as to obtain a sound source position of these acoustic waves. The system may further include a sound direction recognition device, wherein each acoustic wave collecting device further includes a preamplifier and a signal detector for converting the acoustic wave signal into a conversion pulse signal having a high-level state and a low-level state. In the sound direction recognition device, each acoustic wave collecting device further includes a microphone and a post-filter amplifier, wherein the pre-amplifier is connected to the microphone and the post-filter amplifier respectively, and the signal detector is connected to the post-amplifier and the processing unit respectively.

So far, the positioning information of the acoustic signal source 20 may be determined by calculation, so that an absolute position of the acoustic signal source 20 may also be calculated.

Therefore, the present disclosure may help the driver to readily detect a location of a special vehicle such as an ambulance and recognize and make a passage for a special vehicle such as an ambulance. Even if limited by the in-vehicle conditions, an occupant within the vehicle does not hear a siren sound or cannot recognize a direction from which the sound comes at all, the driver may still readily avoid a special vehicle such as an ambulance by way of a real-time location 21 of the acoustic wave signal source 20 in the digital map 30 displayed on the display of the navigation device.

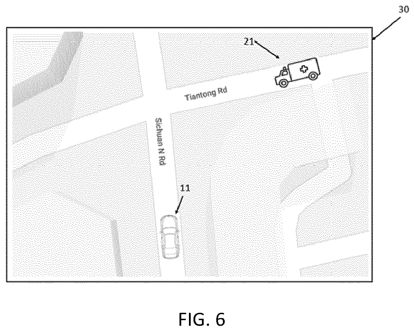

FIG. 6 is a schematic view of marking an acoustic wave signal source 20 on a digital map. According to the above, the technical solution of the present disclosure consists in that: the relative position of the acoustic signal source 20 relative to the vehicle 10 may be calculated based on the relative installation positions among the first acoustic wave collecting device 301, the second acoustic wave collecting device 302 and the third acoustic wave collecting device 303 and the time differences among the three acoustic wave signals. Then, the position 11 of this vehicle 10 itself is obtained from a navigation device, such as a GPS positioning function module. The absolute position 21 of the acoustic wave signal source 20, that is, its positioning information, may be calculated by using the position 11 and the relative position of the acoustic wave signal source 20. As shown in FIG. 6, by positioning the acoustic signal source 20, the real-time location 21 of the ambulance traveling on Tiantong Road may be recognized, and the driver or vehicle may be informed of the real-time location 21 of the special vehicle. Particularly preferably, the positions of this vehicle 10 and the acoustic signal source 20 are displayed on the digital map 30 at the same time. In this way, the driver can be visually acknowledged whether this vehicle should avoid the acoustic wave signal source 20 immediately and whether the acoustic wave signal source 20 may appear on the road ahead. Therefore, it is possible to help the driver or self-driving vehicle to detect a location of a special vehicle such as an ambulance readily, take necessary measures, and make a specific passage of the ambulance. Even if an occupant within the vehicle does not perceive a siren sound or cannot recognize a direction from which the sound comes at all, the driver may still avoid readily and appropriately.

The above-described recognition and display control process, which is fully automatic, does not require manual operation on an operating interface of the in-vehicle system, thereby improving the user experience and avoiding a potential safety hazard.

## Claims

1. A method for positioning an acoustic wave signal source in a vehicle, wherein the method comprises:
- collecting (101) at least two acoustic wave signals;
- calculating (102) a relative position of the acoustic wave signal source (20) relative to the vehicle (10) based on the at least two acoustic wave signals;
- obtaining (103) a position of the vehicle (10); and
- determining (104) positioning information, that is the absolute position, of the acoustic wave signal source (20) based on the position of the vehicle (10) and the calculated relative position of the acoustic wave signal source (20) relative to the vehicle (10), and judging a movement direction and speed of the acoustic wave signal source by a frequency shift of the collected acoustic wave signal,
**characterized in that**, the method further comprises:
- correcting (106) the absolute position of the acoustic wave signal source (20) by means of road information in a digital map (30) with both the road area and the road traffic direction as boundary conditions;
- marking (105) the acoustic wave signal source (20) in the digital map (30) according to the absolute position of the acoustic wave signal source (20).

2. The method according to claim 1, **characterized in that** the step of "calculating (102) a relative position of an acoustic wave signal source (20) relative to the vehicle (10) based on the at least two acoustic wave signals" includes:
- calculating a time difference between the at least two acoustic wave signals; and
- calculating a relative position of the acoustic wave signal source (20) relative to the vehicle (10) based on collection positions of the at least two acoustic wave signals as well as the time difference.

3. The method according to claim 2, **characterized in that** the step of "calculating a time difference between the at least two acoustic wave signals" includes:
- comparing receiving times for the same sound in the at least two acoustic wave signals.

4. The method according to one of claims 1 to 3, **characterized in that** the method comprises:
- considering an amplitude of the acoustic wave signal when calculating (102) the relative position of the acoustic wave signal source (20) relative to the vehicle (10).

5. A device , adapted for use in a vehicle, for positioning an acoustic wave signal source wherein the device comprises:
- an acoustic wave collecting module (201) configured to collect at least two acoustic wave signals;
- a relative position calculating module (202) configured to calculate a relative position of the acoustic wave signal source (20) relative to the vehicle (10) based on the at least two acoustic wave signals and to judge a movement direction and speed of the acoustic wave signal source by a frequency shift of the collected acoustic wave signal;
- a position obtaining module (203) configured to obtain a position of the vehicle (10); and
- a positioning information calculating module (204) configured to determine positioning information , that is the absolute position, of the acoustic wave signal source (20) based on the position of the vehicle (10) and the calculated relative position of the acoustic wave signal source (20) relative to the vehicle (10).
**characterized in that**, the device further comprises:
- a correcting module (206) configured to correct (106) the absolute position of the acoustic wave signal source (20) by means of road information in a digital map (30) with both the road area and the road traffic direction as boundary conditions;
- a map marking module (205) configured to mark the absolute position of the acoustic wave signal source in the digital map (30).

6. The device according to claim 5, **characterized in that** the relative position calculating module (202) is further configured to:
- calculate a time difference between the at least two acoustic wave signals; and
- calculate a relative position of the acoustic wave signal source (20) relative to the vehicle (10) based on collection positions of the at least two acoustic wave signals as well as the time difference.

7. The device according to claim 6, **characterized in that** the relative position calculating module (202) is further configured to:
- compare receiving times for the same sound in the at least two acoustic wave signals.

8. The device according to claim 6, **characterized in that** the relative position calculating module (202) is further configured to:
- consider an amplitude of the acoustic wave signal when calculating (102) the relative position of the acoustic wave signal source (20) relative to the vehicle (10).

9. A system for positioning an acoustic wave signal source **characterized in that** the system comprises:
- a device for positioning an acoustic wave signal source according to one of claims 5 to 8;
- at least two acoustic wave collecting devices mounted at different positions of the vehicle (10);
- at least one navigation device for providing a position of the vehicle (10).

10. A vehicle (10), **characterized in that** the vehicle (10) comprises a system for positioning an acoustic wave signal source in a vehicle according to claim 9.

## Patentansprüche

1. Verfahren zur Positionierung einer Quelle eines akustischen Wellensignals in einem Fahrzeug, wobei das Verfahren umfasst:
- Sammeln (101) von mindestens zwei akustischen Wellensignalen;
- Berechnen (102) einer relativen Position der Quelle (20) des akustischen Wellensignals relativ zu dem Fahrzeug (10) basierend auf den mindestens zwei akustischen Wellensignalen;
- Erhalten (103) einer Position des Fahrzeugs (10); und
- Bestimmen (104) von Positionierungsinformationen, das heißt der absoluten Position, der Quelle (20) des akustischen Wellensignals basierend auf der Position des Fahrzeugs (10) und der berechneten relativen Position der Quelle (20) des akustischen Wellensignals relativ zu dem Fahrzeug (10), und Beurteilen einer Bewegungsrichtung und einer Geschwindigkeit der Quelle des akustischen Wellensignals durch eine Frequenzverschiebung des gesammelten akustischen Wellensignals,
**dadurch gekennzeichnet, dass** das Verfahren ferner umfasst:
- Korrigieren (106) der absoluten Position der Quelle (20) des akustischen Wellensignals mittels Straßeninformationen in einer digitalen Karte (30) mit sowohl dem Straßenbereich als auch der Straßenverkehrsrichtung als Grenzbedingungen;
- Markieren (105) der Quelle (20) des akustischen Wellensignals in der digitalen Karte (30) gemäß der absoluten Position der Quelle (20) des akustischen Wellensignals.

2. Verfahren nach Anspruch 1, **dadurch gekennzeichnet, dass** der Schritt zum "Berechnen (102) einer relativen Position einer Quelle (20) des akustischen Wellensignals relativ zu dem Fahrzeug (10) basierend auf den mindestens zwei akustischen Wellensignalen" einschließt:
- Berechnen einer Zeitdifferenz zwischen den mindestens zwei akustischen Wellensignalen; und
- Berechnen einer relativen Position der Quelle (20) des akustischen Wellensignals relativ zu dem Fahrzeug (10) basierend auf Sammelpositionen der mindestens zwei akustischen Wellensignalen sowie der Zeitdifferenz.

3. Verfahren nach Anspruch 2, **dadurch gekennzeichnet, dass** der Schritt zum "Berechnen einer Zeitdifferenz zwischen den mindestens zwei akustischen Wellensignalen" einschließt:
- Vergleichen von Empfangszeiten für den gleichen Ton in den mindestens zwei akustischen Wellensignalen.

4. Verfahren nach einem der Ansprüche 1 bis 3, **dadurch gekennzeichnet, dass** das Verfahren umfasst:
- Berücksichtigen einer Amplitude des akustischen Wellensignals bei der Berechnung (102) der relativen Position der Quelle (20) des akustischen Wellensignals relativ zu dem Fahrzeug (10).

5. Vorrichtung, die zur Verwendung in einem Fahrzeug ausgebildet ist, zur Positionierung einer Quelle eines akustischen Wellensignals, wobei die Vorrichtung umfasst:
- ein Akustisches-Wellen-Sammelmodul (201), das ausgelegt ist zum Sammeln von mindestens zwei akustischen Wellensignalen;
- ein Relative-Position-Berechnungsmodul (202), das ausgelegt ist zum Berechnen einer relativen Position der Quelle (20) des akustischen Wellensignals relativ zu dem Fahrzeug (10) basierend auf den mindestens zwei akustischen Wellensignalen und Beurteilen einer Bewegungsrichtung und einer Geschwindigkeit der Quelle des akustischen Wellensignals durch eine Frequenzverschiebung des gesammelten akustischen Wellensignals;
- ein Positionserhaltemodul (203), das ausgelegt ist zum Erhalten einer Position des Fahrzeugs (10); und
- ein Positionierungsinformationsberechnungsmodul (204), das ausgelegt ist zum Bestimmen von Positionierungsinformationen, das heißt der absoluten Position, der Quelle (20) des akustischen Wellensignals basierend auf der Position des Fahrzeugs (10) und der berechneten relativen Position der Quelle (20) des akustischen Wellensignals relativ zu dem Fahrzeug (10), **dadurch gekennzeichnet, dass** die Vorrichtung ferner umfasst:
- ein Korrekturmodul (206), das ausgelegt ist zum Korrigieren (106) der absoluten Position der Quelle (20) des akustischen Wellensignals mittels Straßeninformationen in einer digitalen Karte (30) mit sowohl dem Straßenbereich als auch der Straßenverkehrsrichtung als Grenzbedingungen;
- ein Kartenmarkierungsmodul (205), das ausgelegt ist zum Markieren der absoluten Position der Quelle des akustischen Wellensignals in der digitalen Karte (30).

6. Vorrichtung nach Anspruch 5, **dadurch gekennzeichnet, dass** das Relative-Position-Berechnungsmodul (202) ferner ausgelegt ist zum:
- Berechnen einer Zeitdifferenz zwischen den mindestens zwei akustischen Wellensignalen; und
- Berechnen einer relativen Position der Quelle (20) des akustischen Wellensignals relativ zu dem Fahrzeug (10) basierend auf Sammelpositionen der mindestens zwei akustischen Wellensignalen sowie der Zeitdifferenz.

7. Vorrichtung nach Anspruch 6, **dadurch gekennzeichnet, dass** das Relative-Position-Berechnungsmodul (202) ferner ausgelegt ist zum:
- Vergleichen von Empfangszeiten für den gleichen Ton in den mindestens zwei akustischen Wellensignalen.

8. Vorrichtung nach Anspruch 6, **dadurch gekennzeichnet, dass** das Relative-Position-Berechnungsmodul (202) ferner ausgelegt ist zum:
- Berücksichtigen einer Amplitude des akustischen Wellensignals bei der Berechnung (102) der relativen Position der Quelle (20) des akustischen Wellensignals relativ zu dem Fahrzeug (10).

9. System zur Positionierung einer Quelle eines akustischen Wellensignals, **dadurch gekennzeichnet, dass** das System umfasst:
- eine Vorrichtung zur Positionierung einer Quelle eines akustischen Wellensignals nach einem der Ansprüche 5 bis 8;
- mindestens zwei Sammelvorrichtungen für akustische Wellen, die an unterschiedlichen Positionen des Fahrzeugs (10) befestigt sind;
- mindestens eine Navigationsvorrichtung zum Bereitstellen einer Position des Fahrzeugs (10).

10. Fahrzeug (10), **dadurch gekennzeichnet, dass** das Fahrzeug (10) ein System zur Positionierung einer Quelle eines akustischen Wellensignals in einem Fahrzeug nach Anspruch 9 umfasst.

## Revendications

1. Procédé de positionnement d'une source de signaux d'ondes acoustiques dans un véhicule, le procédé comprenant les étapes suivantes :
- collecter (101) au moins deux signaux d'ondes acoustiques ;
- calculer (102) une position relative de la source de signaux d'ondes acoustiques (20) par rapport au véhicule (10) sur la base des au moins deux signaux d'ondes acoustiques ;
- obtenir (103) une position du véhicule (10) ; et
- déterminer (104) les informations de positionnement, c'est-à-dire la position absolue, de la source de signaux d'ondes acoustiques (20) sur la base de la position du véhicule (10) et de la position relative calculée de la source de signaux d'ondes acoustiques (20) par rapport au véhicule (10), et évaluer la direction et la vitesse du mouvement de la source de signaux d'ondes acoustiques par un décalage de fréquence du signal d'ondes acoustiques collecté,
**caractérisé en ce que** le procédé comprend en outre les étapes suivantes :
- corriger (106) la position absolue de la source de signaux d'ondes acoustiques (20) au moyen d'informations routières dans une carte numérique (30) avec à la fois la zone routière et la direction du trafic routier comme conditions limites ;
- marquer (105) de la source de signaux d'ondes acoustiques (20) sur la carte numérique (30) en fonction de la position absolue de la source de signaux d'ondes acoustiques (20).

2. Procédé selon la revendication 1, **caractérisé en ce que** l'étape de « calcul (102) d'une position relative d'une source de signaux d'ondes acoustiques (20) par rapport au véhicule (10) sur la base des au moins deux signaux d'ondes acoustiques » comprend :
- le calcul d'une différence de temps entre les au moins deux signaux d'ondes acoustiques ; et
- le calcul d'une position relative de la source de signaux d'ondes acoustiques (20) par rapport au véhicule (10) sur la base des positions de collecte des au moins deux signaux d'ondes acoustiques ainsi que de l'écart temporel.

3. Procédé selon la revendication 2, **caractérisé en ce que** l'étape de « calcul d'un écart temporel entre les au moins deux signaux d'ondes acoustiques » comprend :
- la comparaison des temps de réception d'un même son dans les au moins deux signaux d'ondes acoustiques.

4. Procédé selon l'une des revendications 1 à 3, **caractérisé en ce que** le procédé comprend :
- la prise en compte d'une amplitude des signaux d'ondes acoustiques lors du calcul (102) de la position relative de la source de signaux d'ondes acoustiques (20) par rapport au véhicule (10).

5. Dispositif, adapté pour être utilisé dans un véhicule, pour positionner une source de signaux d'ondes acoustiques, le dispositif comprenant :
- un module de collecte d'ondes acoustiques (201) configuré pour collecter au moins deux signaux d'ondes acoustiques ;
- un module de calcul de la position relative (202) configuré pour calculer une position relative de la source de signaux d'ondes acoustiques (20) par rapport au véhicule (10) sur la base d'au moins deux signaux d'ondes acoustiques et pour évaluer une direction de mouvement et une vitesse de la source de signaux d'ondes acoustiques par un décalage de fréquence des signaux d'ondes acoustiques collectés ;
- un module d'obtention de la position (203) configuré pour obtenir la position du véhicule (10) ; et
- un module de calcul des informations de positionnement (204) configuré pour déterminer les informations de positionnement, c'est-à-dire la position absolue, de la source de signaux d'ondes acoustiques (20) sur la base de la position du véhicule (10) et de la position relative calculée de la source de signaux d'ondes acoustiques (20) par rapport au véhicule (10),
**caractérisé en ce que** le dispositif comprend en outre :
- un module de correction (206) configuré pour corriger (106) la position absolue de la source de signaux d'ondes acoustiques (20) au moyen d'informations routières dans une carte numérique (30) avec à la fois la zone routière et la direction du trafic routier comme conditions limites ;
- un module de marquage cartographique (205) configuré pour marquer la position absolue de la source de signaux d'ondes acoustiques sur la carte numérique (30).

6. Dispositif selon la revendication 5, **caractérisé en ce que** le module de calcul de la position relative (202) est en outre configuré pour :
- calculer une différence de temps entre les au moins deux signaux d'ondes acoustiques ; et
- calculer une position relative de la source de signaux d'ondes acoustiques (20) par rapport au véhicule (10) sur la base des positions de collecte des au moins deux signaux d'ondes acoustiques ainsi que de l'écart temporel.

7. Dispositif selon la revendication 6, **caractérisé en ce que** le module de calcul de la position relative (202) est en outre configuré pour :
- comparer les temps de réception d'un même son dans les au moins deux signaux d'ondes acoustiques.

8. Dispositif selon la revendication 6, **caractérisé en ce que** le module de calcul de la position relative (202) est en outre configuré pour :
- prendre en compte une amplitude des signaux d'ondes acoustiques lors du calcul (102) de la position relative de la source de signaux d'ondes acoustiques (20) par rapport au véhicule (10).

9. Système de positionnement d'une source de signaux d'ondes acoustiques **caractérisé en ce que** le système comprend :
- un dispositif de positionnement d'une source de signaux d'ondes acoustiques selon l'une des revendications 5 à 8 ;
- au moins deux dispositifs de collecte d'ondes acoustiques montés à différentes positions du véhicule (10) ;
- au moins un dispositif de navigation pour fournir une position du véhicule (10).

10. Véhicule (10), **caractérisé en ce que** le véhicule (10) comprend un système de positionnement d'une source de signaux d'ondes acoustiques dans un véhicule selon la revendication 9.
